# FASCICULE DE BREVET EUROPEEN

(11) **EP 2 657 042 B1**
(45) Date de publication et mention de la délivrance du brevet: **24.12.2014**
(21) Numéro de dépôt: 13002164.5
(22) Date de dépôt: 24.04.2013
(51) Int. Cl.: B60B 1/00, B60B 1/04, B60B 1/02, B60B 5/02

(54) **Rayon pour roue de cycle et roue de cycle comportant un tel rayon**
Fahrradspeiche und eine solche Speiche umfassendes Rad eines Fahrrads
Spoke for a bicycle wheel and bicycle wheel comprising such a spoke

(30) Priorité: 27.04.2012 FR 1201255
(43) Date de publication de la demande: 30.10.2013
(73) Titulaire: MAVIC S.A.S., 74370 Metz-Tessy (FR)
(72) Inventeur: Davoine, Michel, 74540 Gruffy (FR); Righini, Claude, 74290 Veyrier du Lac (FR); Normand, Joseph, 73420 Mery (FR)
(74) Mandataire: Rambaud, Pascal

(56) Documents cités:
- EP-A1- 1 559 581
- WO-A1-03/018331
- WO-A1-2011/137665
- FR-A1- 2 900 869

## Description

La présente invention concerne un rayon pour roue de cycle ainsi qu'une roue de cycle comportant un tel rayon.

De manière connue, les rayons des roues d'un cycle sont tendus lors du montage de la roue car de par leur longueur et leur faible section ils ne peuvent travailler en compression. Lors de l'utilisation du cycle, les rayons sont soumis au processus de fatigue car, pour chaque tour de roue, ils subissent un cycle de chargement qui fait varier constamment leur tension. En effet, lorsqu'un rayon est situé entre le sol et le moyeu de la roue, sa tension est réduite suite à une légère déformation de la roue causée par le poids du cycliste, et lorsqu'un rayon passe au dessus du moyeu, il est retendu par la précontrainte et l'effet de la charge. Les extrémités des rayons, qui comportent chacune une zone de fixation leur permettant d'être assemblés à la jante ou au moyeu de la roue, sont plus touchées par le phénomène de fatigue que la partie centrale des rayons de part les concentrations de contraintes induites par les variations géométriques des zones de fixation (filetage, coude, tête...), et présentent donc un risque de casse plus important. Les extrémités des rayons doivent donc avoir des caractéristiques mécaniques plus élevées que celles de la partie centrale des rayons, c'est pourquoi leur section est, de manière classique, plus grande que celle de la partie centrale.

En plus d'une très bonne résistance à la traction, les rayons doivent avoir une certaine souplesse en flexion. Une certaine souplesse en flexion des rayons garantira à la roue complète une meilleure résistance aux chocs latéraux, par exemple lorsqu'un cycliste roulant en peloton très compact vient par mégarde trop se rapprocher d'un autre, les rayons de sa roue avant peuvent alors venir heurter le dérailleur arrière du cycliste situé juste devant lui, cette intrusion pouvant entrainer la rupture de plusieurs rayons pouvant conduire à un affaissement de la roue avant et une perte de contrôle du cycliste entrainant une chute gravissime. Lorsqu'un rayon présente une certaine souplesse, ce type d'intrusion pourra endommager le rayon sans pour autant que celui-ci ne se casse.

Les rayons réalisés en matériau métallique tel que l'acier peuvent combiner une bonne résistance à la traction à une certaine souplesse, mais ils sont lourds.

Les rayons réalisés en matériau composite sont à résistance équivalente beaucoup plus légers mais sont plus fragiles. Notamment, les matériaux composites ont des caractéristiques de traction exceptionnelles mais ont en revanche de très faibles propriétés en cisaillement, ce qui ne permet pas de faire des filetages performants sur des tiges composite. C'est pourquoi, ces matériaux sont très bien adaptés à la zone centrale qui est sollicitée en traction mais il est très délicat de les accrocher à la jante et au moyeu sans utiliser une pièce métallique d'accrochage particulièrement pour permettre le réglage de leur tension indépendamment les uns des autres afin d'assurer une parfaite géométrie à la roue.

Il est connu de combiner matière métallique et composite pour réaliser des rayons hybrides.

Par exemple le document EP 1 930 146 qui comporte les caractéristiques du préambule de la revendication 1, décrit un rayon comportant une âme en aluminium recouverte d'un fourreau formé par des fibres de carbone enrobées de résine durcie par polymérisation.

Ce rayon a l'avantage d'être très léger, grâce à son âme en aluminium. Néanmoins, malgré l'utilisation de matériau composite ce rayon n'est pas forcément adapté à des applications demandant une rigidité très élevée car le module d'élasticité et donc la rigidité de l'aluminium est uniquement de l'ordre de 71 000 MPa. De plus ce type de rayon impose des attaches spécifiques et assez volumineuses à la jante et au moyeu, et ces attaches ne sont pas adaptables à tout type de jante / moyeu.

Un autre exemple de rayon hybride est décrit dans le document FR 2 915 710. Dans ce cas l'âme est constituée par l'assemblage par soudure d'une lame et de deux embouts. Etant donné que la soudure détériore localement les propriétés du métal, il est nécessaire de tenir compte de cette détérioration lors du dimensionnement de l'âme. Finalement pour obtenir un rayon suffisamment résistant, il est nécessaire de réaliser une âme relativement lourde. De plus, un tel rayon dont l'âme nécessite un assemblage de trois éléments distincts est coûteux à fabriquer.

Un troisième exemple de rayon hybride est donné dans le document EP 1 420 963. Le rayon décrit dans les figures 1 à 6 de ce document comprend une âme métallique de section constante et un fourreau réalisé en matériau composite. L'objectif poursuivi par le concepteur d'un tel rayon est d'améliorer l'aérodynamisme et il se contente de donner une forme d'aile au fourreau.

L'objectif de l'invention est de réaliser un rayon hybride qui combine une excellente résistance à la traction, une certaine souplesse en flexion tout en garantissant un poids minimal.

L'objectif de l'invention est atteint par la fourniture d'un rayon comprenant une âme métallique recouverte au moins dans sa partie centrale d'un fourreau en matériau composite constitué d'un assemblage de fibres noyées dans une matrice, ladite âme métallique comprenant une portion d'extrémité prévue pour être attachée à la jante ou au moyeu d'une roue et une portion principale dont la superficie de la section est comprise entre 30% et 50%, de préférence entre 35% et 45%, de la superficie de la section de ladite portion d'extrémité.

Selon un mode de réalisation préféré l'âme est réalisée en acier et le fourreau comprend des fibres de carbone.

Selon un mode de réalisation préférentiel de l'invention, le fourreau a, au niveau du corps principal de l'âme, une section comprise entre 150% et 500%, de préférence comprise entre 150% et 350%, de la section de l'âme métallique au même niveau.

Selon un mode de réalisation préféré, l'âme métallique comprend deux zones d'ancrage mécaniques, chacune d'elle étant situées à proximité d'une de ses extrémités, et de part et d'autre du corps principal. Entre ces deux zones d'ancrage mécaniques, la surface extérieure de l'âme est lisse, et notamment la surface extérieure du corps principal de l'âme. Au-delà des deux zones d'ancrages, l'âme comprend deux zones intermédiaires dont la surface extérieure est lisse.

L'objectif de l'invention est également atteint la fabrication d'un rayon comportant une âme métallique enrobée d'un fourreau en matière composite, dans lequel la réduction de la portion principale de l'âme est réalisé par martelage.

L'objectif de l'invention est également atteint la fabrication d'un rayon comportant une âme métallique enrobée d'un fourreau en matière composite, dans lequel la réduction de la portion principale de l'âme est réalisé par un procédé qui comprend les étapes suivantes: une étape de recuit, dans laquelle seulement certaines parties préalablement écrouies d'un fil sont chauffées pour obtenir un recuit, et une étape de rétreint final, se déroulant après l'étape de recuit, dans laquelle les parties recuites sont rétreintes pour diminuer leur section. Le procédé peut également comprendre une étape de rétreint préliminaire, se déroulant avant l'étape de recuit, dans laquelle sont rétreintes des parties du fil qui constitueront lesdites certaines parties ensuite chauffées lors de l'étape de recuit.

Enfin l'objectif de l'invention est également atteint par la fourniture d'une roue qui est équipée d'au moins un rayon conforme à ce qui précède.

L'invention sera mieux comprise à la lecture de la description qui va suivre d'un rayon et d'une roue conforme à l'invention, donnée uniquement à titre d'exemple et faite en référence aux dessins annexés dans lesquels :
La figure 1 représente un rayon en perspective selon un mode de réalisation de l'invention.
La figure 2 est une vue en coupe longitudinale de la partie droite du rayon représenté à la figure 1.
La figure 3 est une vue en coupe longitudinale de la partie gauche du rayon représenté à la figure 1.
Les figures 4 et 5 représentent des vues en coupe transversale du rayon de la figure 1.
La figure 6 représente une roue de vélo selon un mode de réalisation de l'invention.
La figure 7 est une vue en perspective d'un fil à partir duquel peut être fabriquée l'âme du rayon selon un deuxième procédé de fabrication.
La figure 8 est une coupe selon le plan III à la figure 7.
La figure 9 est une vue en perspective du fil de la figure 7 à l'issue d'une étape de rétreint préliminaire.
La figure 10 est une coupe selon le plan V à la figure 9.
La figure 11 est une vue en perspective du fil de la figure 7 à l'issue d'une étape de rétreint final.
La figure 12 est une coupe selon le plan VII à la figure 11.
La figure 13 est une vue en perspective d'un dispositif qui permet d'effectuer une opération de rétreint.
La figure 14 est une vue en perspective d'un fil dans le cadre d'un troisième procédé de fabrication de l'âme métallique.

Le rayon 2 selon le premier mode de réalisation de l'invention comprend une âme 5 réalisée en acier inoxydable ou en acier au carbone. Cette âme est obtenue à partir d'un fil d'acier de diamètre de 2 mm. L'âme comprend une section variable sur sa longueur. Le corps principal 6 de l'âme constitue la majeure partie de la longueur de l'âme. Le diamètre du corps principal 6 de l'âme est réduit par rapport au diamètre du fil métallique qui sert à la réalisation de l'âme. Le diamètre du corps principal 6 correspond à un pourcentage compris entre 55% et 70% du diamètre du fil initial. Dans le cas d'espèce, le diamètre du corps principal est d'environ 1,25 mm. La réduction du diamètre du corps principal est réalisée par martelage.

L'invention ne se limite pas au cas où la section du corps principal 6 de l'âme est circulaire. Dans le cas où cette section est elliptique ou d'une forme circulaire, le rapport entre la superficie de la section de la portion principale et celle des portions d'extrémité du rayon est compris entre 30% et 50%.

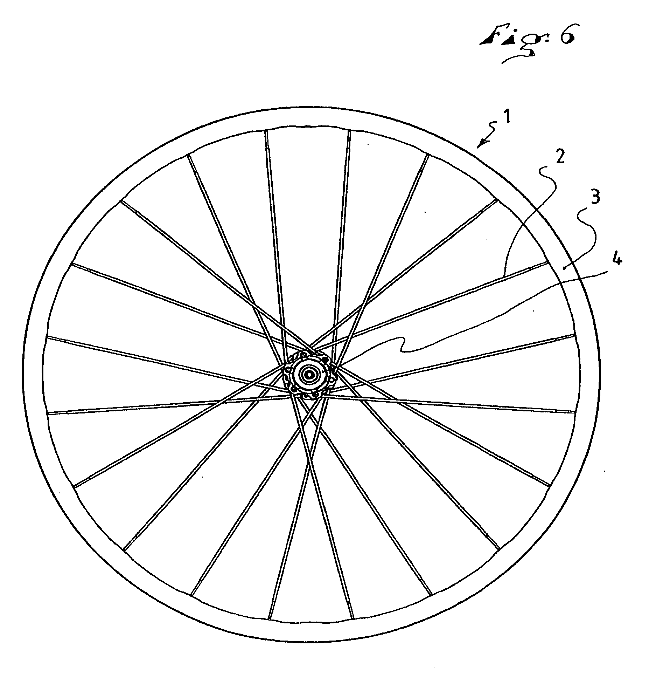

L'âme 5 métallique du rayon est équipée à ses deux extrémités de moyens de fixation servant à la fixation à la jante et au moyeu d'une roue de cycle telle que représentée à la figure 6. Dans l'exemple représenté, les moyens de fixation consistent d'une part en une tête 7 dont le diamètre est environ de 3,9 mm. La tête 7 est réalisée par frappe de la première extrémité de l'âme 5 et le diamètre de raccordement avec le fil a été augmenté lors de la frappe à 2,3 mm sur quelques millimètres dans la zone de raccordement de la tête pour augmenter sa résistance (comme cela est décrit dans le document US 7,181,844). On réalise ainsi un épaulement renforcé qui peut être retenu dans un perçage de diamètre inférieur au diamètre de la tête 7. Un plat d'anti-rotation 13 a été ajouté sous la tête pour positionner angulairement le rayon et l'empêcher de tourner.

Les moyens de fixation comprennent d'autre part une zone filetée 8 réalisée à la deuxième extrémité de l'âme. Cette zone filetée pourra être vissée directement dans la jante, dans un oeillet taraudé retenu à la jante ou encore associée à un écrou.

Entre les moyens de fixation 7, 8 et le corps principal de l'âme, se trouvent trois portions distinctes et adjacentes. A la proximité immédiate des moyens de fixation, de chaque côté de l'âme se trouve une portion intermédiaire 9. Cette portion intermédiaire a un état de surface lisse. Les portions intermédiaires ont une longueur de quelques millimètres.

Deux zones d'ancrage 10 sont placées à côté des portions intermédiaires 9. Les zones d'ancrage peuvent être réalisées par le formage d'un filetage à la périphérie du fil d'acier sur une longueur de quelques millimètres, entre 5 mm et 10 mm, et un diamètre sensiblement égal au diamètre initial du fil.

Les deux portions d'ancrage 10 sont reliées au corps principal 6 de l'âme par l'intermédiaire de zones de variation progressive 11 du diamètre.

Un fourreau 12 réalisé en matériau composite enveloppe l'âme métallique 5 sur toute la partie centrale de celui-ci. Le fourreau comprend une multitude de filaments de carbone noyés dans une résine thermodurcissable ou thermoplastique. Le fourreau est mécaniquement solidaire de l'âme 5 au niveau des deux zones d'ancrage 10. Entre ces deux zones d'ancrage 10, il n'y a pas d'ancrage mécanique par obstacle, du fourreau et de l'âme métallique, l'interface de liaison est donc lisse et la matrice du composite a donc une tenue au cisaillement limitée dans cette zone de liaison.

L'absence d'ancrage mécanique du fourreau 12 au niveau du corps principal 6 de l'âme 5 garantit une meilleure résistance au choc du rayon, car lorsqu'il se trouve accidentellement soumis à un effort tranchant élevé dans sa partie centrale par l'intrusion d'un obstacle, la contrainte de cisaillement entre l'âme 5 et le fourreau 12 devient rapidement supérieure à la contrainte de cisaillement admissible par l'interface de liaison entre la matrice du fourreau 12 et l'âme centrale 5, il s'en suit un glissement de cisaillement pouvant absorber une énergie importante dopant du même coup la résistance au choc du rayon, après ce glissement en cisaillement de l'interface le rayon travaille moins en flexion et se comporte alors plus comme une corde que comme une poutre fléchissante, il vient ainsi se couder dans la zone d'impact comme le fait un rayon métallique ayant un grand allongement, alors qu'un rayon composite qui n'a par la nature de sa fibre de carbone, un allongement que très limité (inférieur à 2%), cédera dès que l'allongement aura dépassé ce faible taux d'allongement.

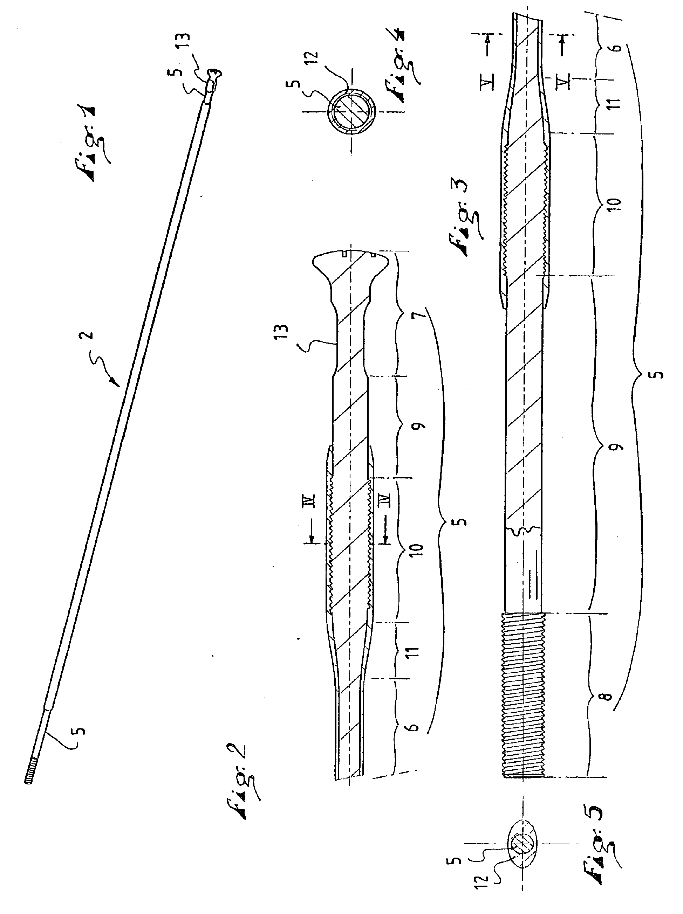

Avantageusement, le rayon conforme à l'invention comporte une certaine quantité de matière composite, c'est-à-dire de fibres noyées dans la matrice de résine. Le ratio entre âme acier et matière composite est illustré aux figures 4 et 5.

La figure 5 représente une section transversale du rayon au niveau du corps principal 6. Il faut noter que le corps principal représente entre 70% et 85% de la longueur totale du rayon. On peut voir à la figure 5, que la proportion surfacique ou volumique de matière composite est plus importante que celle de l'âme acier sans pour autant qu'elle soit beaucoup plus grande, par exemple 10 fois plus. En pratique, la proportion volumique de matière composite est comprise entre 1,5 fois et 5 fois la proportion de matière métallique. Bien entendu, ces proportions peuvent varier en fonction des matériaux choisis. Dans le cas où l'âme est réalisée en acier inoxydable et que le fourreau comprend des fibres de carbone, on a obtenu de bons résultats avec un rayon dont la proportion de matière composite représente entre 1,5 fois et 3,5 fois la proportion de l'âme. Sur une section transversale telle que celle représentée à la figure 5, la superficie Sf de la section du fourreau 12 représente entre 150% et 350% de la superficie Sa de la section de l'âme 5. Dans le cas particulier décrit aux figures 1 à 5, Sf = 2,2 x Sa.

Au niveau des zones d'ancrage 10, la superficie de la section du fourreau est sensiblement la même que la superficie du fourreau Sf au niveau du corps principal. La superficie du fourreau au niveau des extrémités, c'est-à-dire au niveau des zones d'ancrage peut représenter entre 50% et 200% de la superficie de l'âme métallique. Dans le cas particulier décrit aux figures 1 à 5, la section du fourreau représente 80% de la section de l'âme inox.

Un rayon tel que décrit permet d'obtenir un excellent compromis de résistance statique, de résistance à la fatigue, de résistance spécifique et de rigidité en regard de sa masse totale.

Pour fabriquer un rayon conforme à l'invention, on pourra partir d'un fil métallique, par exemple un fil en acier inoxydable, le découper à la longueur voulue, marteler la portion centrale (entre 70% et 85% de sa longueur) pour en réduire le diamètre, réaliser les deux zones d'ancrage 10, puis réaliser les moyens de fixations à ses deux extrémités. Les moyens de fixation peuvent être constitués par un ou des filetages, ou une ou des têtes, ou par tout autre moyen de fixation couramment utilisé pour fixer un rayon à une jante ou un moyeu.

Une fois l'âme métallique réalisée selon ce premier procédé de fabrication de l'âme, on utilise un moule pour la réalisation du fourreau en matière composite directement autour de l'âme. Typiquement, le moule est constitué d'une partie basse dans laquelle on place une partie de la matière composite (fibres et résine) avant d'y placer l'âme métallique. Cette dernière est recouverte du reste de la matière composite et on referme le moule avec la partie haute de celui-ci.

L'âme métallique n'est pas entièrement comprise dans le moule, ses deux extrémités en dépassent. Le moule se ferme sur les portions intermédiaires dont il a été question plus haut. Pour assurer une bonne étanchéité de la fermeture du moule et éviter les fuites de résine, il est important que ces portions intermédiaires aient une surface lisse et régulière.

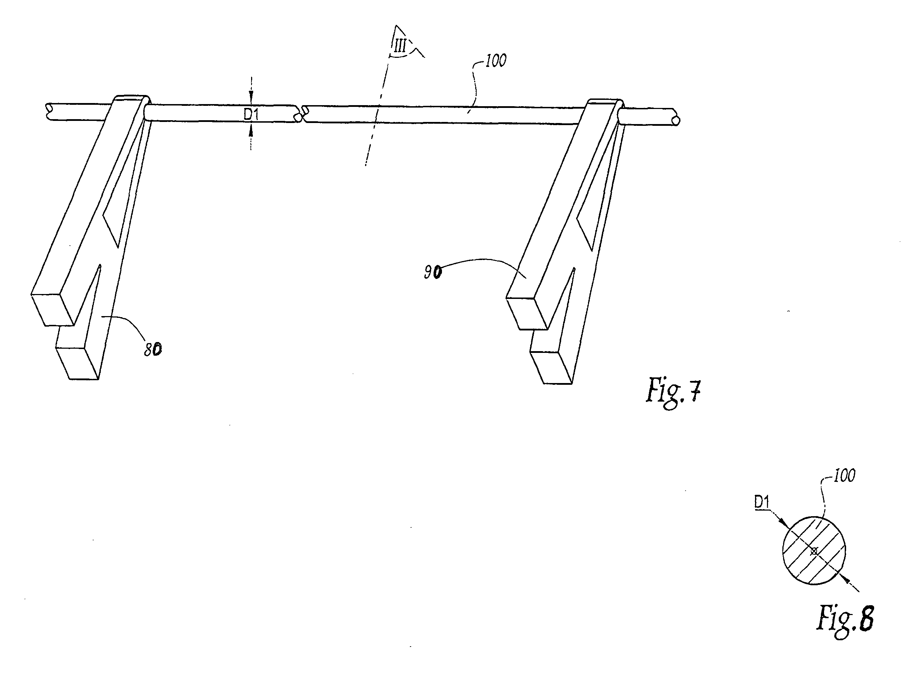

La suite de la description concerne un second procédé de fabrication de l'âme 5 du rayon 1 à partir d'un fil 100, représenté partiellement à la figure 7. Le fil 100 peut être obtenu par exemple au moyen d'une filière et sa longueur peut être plusieurs fois supérieure à la longueur du rayon 1, dans le but de fabriquer plusieurs rayons à partir du fil 100. Il est également envisageable de partir d'un tronçon de fil de longueur telle qu'on ne pourra réaliser qu'un unique rayon. Comme le montre la figure 8, le diamètre du fil 100 est égal au diamètre D1 des zones d'extrémité de l'âme 5. Le fil 100 est représenté dans une configuration dans laquelle il est maintenu par deux pinces 80 et 90. La section transversale du fil 100 est circulaire mais en variante non représentée, la section transversale du fil 100 peut avoir une autre géométrie, par exemple rectangulaire.

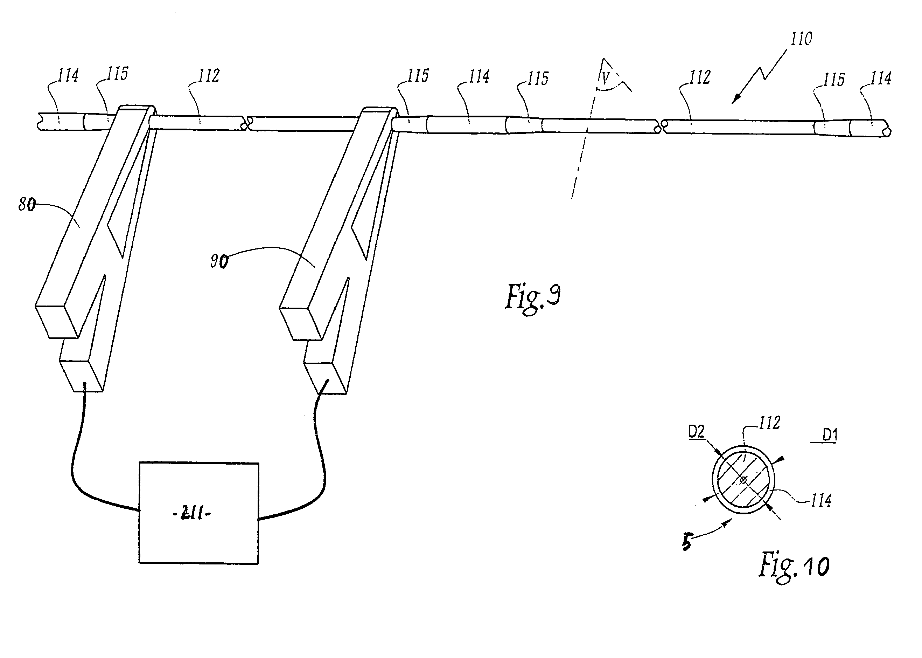

La figure 9 montre un fil 110 qui correspond au fil 100 de la figure 7 à l'issue d'une étape de rétreint préliminaire. Le fil 110 comprend des parties longues 112 représentées partiellement et séparées entre elles par des parties courtes 114. Comme expliqué par la suite, au terme de la fabrication de l'âme 5, les parties longues 112 constitueront le corps principal 6 de l'âme et les parties courtes 114 constitueront les extrémités. Les parties courtes 114 ont le même diamètre D1 que le fil 100 et les parties longues 112 ont un diamètre D2 inférieur au diamètre D1 mais supérieur au diamètre D3 de la partie centrale du fil 110. Les parties 112 et 114 sont reliées entre elles par des parties tronconiques de raccordement 115.

Dans l'étape de rétreint préliminaire, le fil 110 est rétreint seulement au niveau de ses parties qui, à l'issue de cette étape, correspondront aux parties longues 112 du fil 110, de manière à diminuer leur diamètre jusqu'à ce qu'il atteigne le diamètre D2. Dans le même temps, les parties tronconiques 115 sont également rétreintes progressivement pour assurer la continuité du diamètre du fil 110.

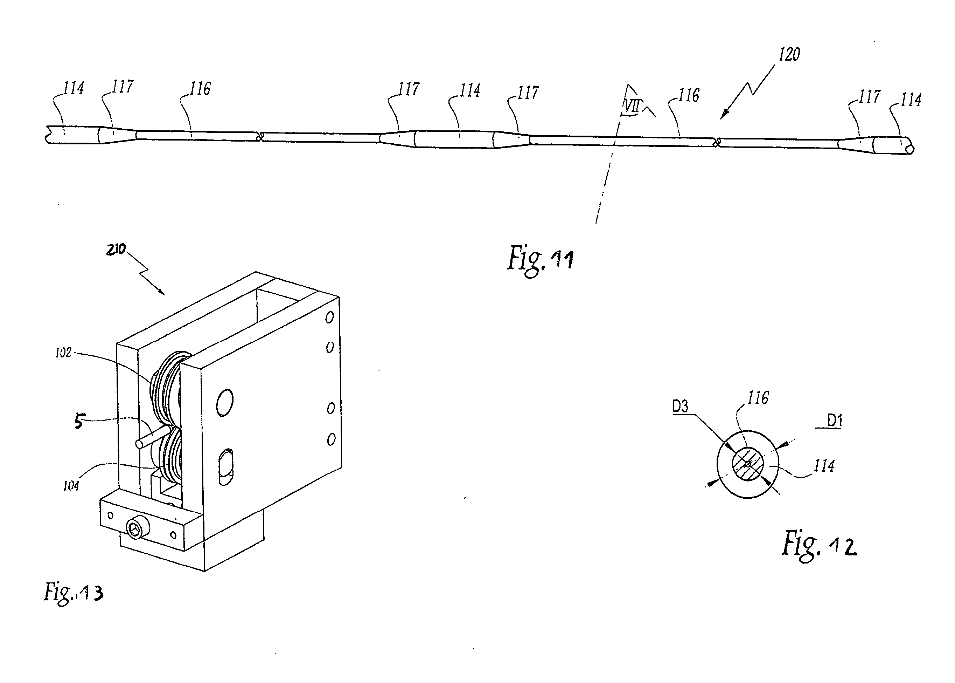

Cette opération de rétreint peut être effectuée, par exemple, en faisant passer le fil 100 entre deux galets 102 et 104 appartenant à un dispositif 10 ad hoc, comme représenté à la figure 13. Par exemple, pour effectuer l'opération de rétreint au moyen du dispositif 210, les extrémités d'une des parties du fil 100 que l'on souhaite rétreindre sont maintenues chacune par un mors, dont l'un est fixe et l'autre est mobile et étire la partie du fil à rétreindre pendant que les galets 102 et 104 écrasent la partie du fil pour la rétreindre.

L'opération de rétreint peut être effectuée à froid ou en chauffant au moins la partie du fil que l'on souhaite rétreindre.

Au terme de l'étape de rétreint préliminaire, les parties longues 112 du fil 110 sont écrouies suite au rétreint, et leur dureté est augmentée.

Il est avantageux de réduire davantage le diamètre D2 des parties longues 112 pour alléger le rayon 1 et améliorer son aérodynamisme. Cependant, si le diamètre D2 des parties longues 112 est réduit davantage au cours de l'étape de rétreint préliminaire, les parties longues 112 deviennent cassantes et risquent la rupture lors de la fabrication du rayon ou lors de l'utilisation du cycle. A titre d'exemple, à partir d'une valeur de 2 mm pour le diamètre D1 du fil 100, on passe à une valeur de 1,8 mm pour le diamètre D2 des parties longues 112.

Afin de pouvoir réduire davantage le diamètre D2 des parties longues 112, le procédé comprend une étape de recuit, dans laquelle les parties longues 112 uniquement sont chauffées afin de les recuire. Le recuit permet de réduire, voire de supprimer, les contraintes internes du matériau en restaurant de l'allongement, mais dégrade sa résistance mécanique en le rendant plus mou. Les parties courtes 114 du fil 110, qui, in fine, constitueront les extrémités de l'âme, ne sont pas recuites car il est avantageux qu'elles conservent leur résistance mécanique, étant donné qu'en service les extrémités de l'âme sont plus exposées au processus de fatigue que le corps principal 6 de l'âme.

L'opération de recuit peut être effectuée, par exemple, en faisant passer un courant électrique dans les parties longues 112 du fil 110 et éventuellement dans les parties tronconiques 115. Pour ce faire, comme le montre la figure 4, on peut, par exemple, relier les bornes d'un générateur électrique 211 aux pinces 80 et 90, qui sont fabriquées à partir d'un matériau qui conduit l'électricité. Ainsi, les parties 112 sont chauffées par effet Joule de manière à obtenir un recuit.

De manière avantageuse, le générateur 211 est paramétré de manière à obtenir un recuit après un temps de chauffe réduit. Par exemple, pour 4V et 27A, la température des parties longues 112 peut être élevée à environ 850°C, ce qui permet d'obtenir un recuit en environ huit secondes, mais en augmentant l'intensité on peut réduire la durée.

Du fait de la réduction de section entre le diamètre D1 et le diamètre D2, la résistivité des parties longues 112 est nettement plus élevée que les parties tronconiques 115 et les parties courtes 114, ainsi l'échauffement sera électriquement localisé dans la partie longue 112 beaucoup plus résistive.

En variante, l'opération de recuit peut être effectuée en chauffant le fil par induction.

En variante, l'opération de recuit pourrait être effectuée en chauffant le fil à la flamme issue de la combustion d'un gaz ou d'un combustible.

De manière avantageuse mais non obligatoire, lors de l'étape de recuit, au moins les parties longues 112 peuvent être placées dans une enceinte close, par exemple une gaine périphérique de diamètre légèrement supérieur au diamètre D2, contenant une atmosphère neutre. Ceci permet d'éviter l'oxydation des parties longues 112, causée par la chaleur, et donc de ne pas dégrader leur état de surface.

En alternative, le courant fourni par le générateur 211, pour effectuer l'opération de recuit, peut être transmis aux parties longues 112 au moyen des galets 102 et 104 du dispositif 10, ce qui simplifie le procédé de fabrication. Dans ce cas, une première borne du générateur est reliée à l'un et/ou l'autre des galets 102 et 104, et une extrémité de la partie longue 112 est placée entre les galets 102 et 104. L'autre borne du générateur est reliée à l'autre extrémité de cette partie longue 112, par exemple au moyen d'une pince semblable aux pinces 80 et 90. Cette mise en oeuvre peut également être employée pour chauffer au moins les parties du fil 100 qui sont rétreintes lors de l'étape de rétreint préliminaire. Dans cette mise en oeuvre le chauffage peut être quasi simultané avec l'opération de rétreint.

Le procédé comprend une étape de rétreint final, qui se déroule après l'étape de recuit, dans laquelle les parties longues 112 sont rétreintes à nouveau pour réduire leur diamètre. Les parties courtes 114 ne sont pas modifiées. La mise en oeuvre de l'opération de rétreint effectuée lors de l'étape de rétreint final peut être analogue à celle de l'étape de rétreint préliminaire. Les figures 11 et 12 montrent ainsi un fil 120 qui correspond au fil 110 des figures 9 et 10, à l'issue de l'étape de rétreint final.

Le fil 120 comprend des parties longues 116 représentées partiellement et séparées entre elles par les parties courtes 114. Au terme de l'étape de rétreint final, les parties longues 112 du fil 110 constitueront les parties longues 116 du fil 120. Les parties courtes 114 sont raccordées aux parties longues 116 par des parties tronconiques 117. Lors de l'étape de rétreint final, les parties tronconiques 115 du fil 110 sont rétreintes pour assurer la continuité du diamètre du fil 120.

Au terme de la fabrication, les parties longues 116 du fil 120 constitueront le corps principal 6 de l'âme 5. A l'issue de l'étape de rétreint final, les parties longues 116 du fil 120 ont le même diamètre D3 que celui du corps principal 6 de l'âme 5.

La surface de la section transversale des parties longues 116, qui est fonction de leur diamètre D3 au carré, peut descendre jusqu'à environ 0,3 fois la surface de la section transversale des parties courtes 114, qui est fonction de leur diamètre D1 au carré. Une telle diminution de section est rendue possible grâce à l'étape de recuit. En effet, le recuit permet avantageusement de réduire, voire de supprimer, les contraintes internes du fil pour le rendre moins cassant en lui restaurant de l'allongement. Le recuit permet de restituer au matériau au moins autant d'allongement qu'il avait avant l'étape de rétreint préliminaire.

Plus généralement, selon l'invention, la surface de la section transversale du corps principal 6 est inférieure ou égale à 0,5 fois la surface de la section transversale des portions d'extrémité de l'âme.

Ainsi, ce deuxième procédé de fabrication permet d'accroitre la réduction de la section du corps principal 6 de l'âme 5 par rapport à la section initiale du fil 100.

Dans une étape de débitage, le fil est sectionné au niveau de chaque partie courte 114 de manière à former plusieurs tronçons, à partir desquels seront fabriqués les rayons 1. Cette étape de débitage peut être effectuée à la suite de l'étape de rétreint final.

Dans une étape de façonnage, les extrémités du rayon 1 sont façonnées pour obtenir la géométrie des portions d'extrémité de l'âme, c'est-à-dire pour obtenir une géométrie qui permet la fixation des portions d'extrémités de l'âme à la jante et au moyeu de la roue. L'étape de façonnage peut être effectuée avant ou après l'étape de rétreint final, par exemple par déformation à froid, frappe à froid, filetage par roulage, usinage ou par forgeage.

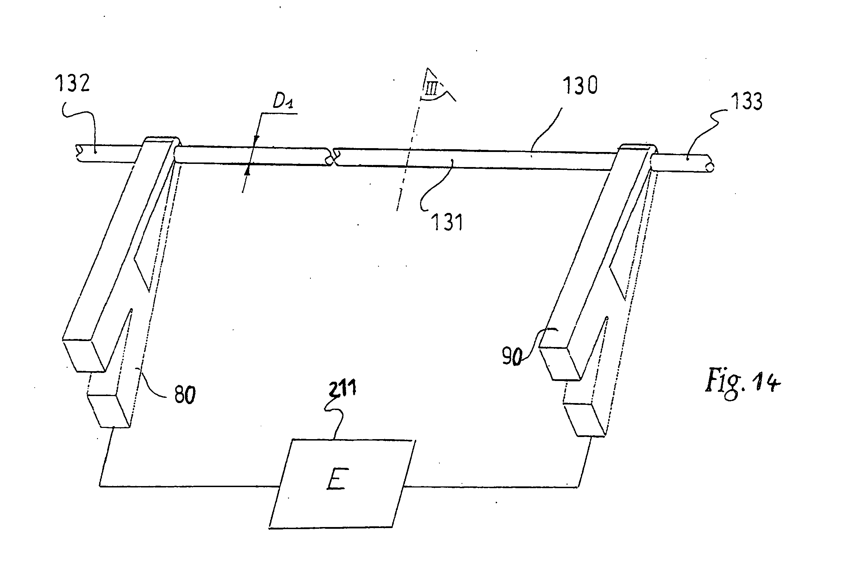

La suite de la description concerne un troisième procédé de fabrication de l'âme 5. Dans le troisième procédé de fabrication, on ne procède pas à l'étape de rétreint préliminaire. On dispose d'un fil 130 de diamètre D1 de longueur dépendant du type de fabrication choisie, en continue ou à l'unité. Un tel fil est décrit à la figure 14. Dans l'exemple décrit à la figure 14, le fil a été débité en tronçons de longueur telle que seule une âme de rayon sera fabriquée à partir de chaque tronçon (fabrication à l'unité).

Conformément à l'invention on procède à une étape de recuit de certaines parties du fil. L'opération de recuit peut être effectuée, par exemple, en faisant passer un courant électrique dans la partie centrale 131 du fil 130. Pour ce faire, comme le montre la figure 14, on peut, par exemple, relier les bornes d'un générateur électrique 211 aux pinces 80 et 90, qui sont fabriquées à partir d'un matériau qui conduit l'électricité. Ainsi, la partie 131 est chauffée par effet Joule de manière à obtenir un recuit. On notera que les parties du fil, 132 et 133 qui sont placées à l'extérieur des pinces 80 et 90 ne sont pas chauffées et leurs caractéristiques mécaniques ne seront pas modifiées.

Suite à l'opération de recuit localisé, le troisième procédé comprend une étape de rétreint final au cours de laquelle la partie centrale 131 est rétreinte. A l'issue de cette étape de rétreint, le diamètre D3 du corps principal est réduit. Avantageusement, cette étape de rétreint permet une réduction du diamètre du fil dans une proportion plus importante que celle habituellement obtenue dans la fabrication de rayon de roue de vélo. A titre d'exemple, partant d'un fil de diamètre de 2 mm, on peut obtenir par ce procédé une réduction du diamètre de la partie centrale 131 dans une fourchette comprise entre 1,4 et 1,2 mm. Au final, on dispose d'une âme de rayon monolithique dont le corps principal a un diamètre inférieur à 70 % du diamètre de ses extrémités. Ces valeurs sont à comparer avec les valeurs obtenues avec les procédés de l'art antérieurs, où pour des aciers ou des alliages similaires la proportion du rapport des diamètres (partie centrale / extrémités) est supérieure à 75%.

Le troisième procédé peut également comprendre des étapes, de façonnage et de revêtement, analogues à celles décrites dans le premier procédé.

Les trois procédés de fabrication d'une âme de rayon décrit ci-dessus sont particulièrement intéressants pour fabriquer une âme de rayon conforme à l'invention, c'est-à-dire pour faire une âme de rayon dont le corps principal présente une réduction de diamètre significative. Ils sont donnés ici à titre d'exemple et ce ne sont pas les seuls procédés possibles dans le cadre de l'invention.

## Revendications

1. Rayon (2) comprenant une âme métallique (5) recouverte au moins dans sa partie centrale d'un fourreau (12) en matériau composite constitué d'un assemblage de fibres noyées dans une matrice, **caractérisé en ce que** l'âme (5) comprend une portion d'extrémité prévue pour être attachée à la jante ou au moyeu d'une roue et un corps principal (6) dont la superficie de la section est comprise entre 30% et 50% de la superficie de la section de ladite portion d'extrémité.

2. Rayon (2) selon la revendication 1, **caractérisé en ce qu'**au niveau du corps principal le fourreau (12) de carbone a une section comprise entre 150% et 500% de la section de l'âme métallique (5) au même niveau.

3. Rayon (2) selon l'une des revendications précédentes, **caractérisé en ce que** la superficie de la section du corps principal (6) de l'âme est comprise entre 35% et 45% de la superficie de la section de la portion d'extrémité et **en ce qu'**au niveau du corps principal, la superficie de la section du fourreau (12) est comprise entre 150% et 350% de la superficie de la section de l'âme au même niveau.

4. Rayon (2) selon l'une des revendications précédentes, **caractérisé en ce que** l'âme (5) comprend deux zones d'ancrage mécaniques (10), chacune d'elle étant situées à proximité d'une de ses extrémités, de part et d'autre du corps principal.

5. Rayon (2) selon l'une des revendications précédentes, **caractérisé en ce que**, entre les deux zones d'ancrage mécaniques (10), la surface extérieure du corps principal de l'âme (5) est lisse.

6. Rayon (2) selon l'une des revendications précédentes, **caractérisé en ce qu'**au-delà des deux zones d'ancrages, l'âme (5) comprend deux zones intermédiaires dont la surface extérieure est lisse.

7. Roue comportant un rayon selon l'une des revendications précédentes.

8. Procédé de fabrication d'un rayon (2) pour roue de cycle selon l'une des revendications 1 à 6, **caractérisé en ce que** la fabrication de l'âme (5) comprend une étape de martelage pour en réduire le diamètre au niveau du corps principal.

9. Procédé de fabrication d'un rayon (2) pour roue de cycle selon l'une des revendications 1 à 6, **caractérisé en ce que** la fabrication de l'âme (5) comprend les étapes suivantes:
- une étape de recuit, dans laquelle seulement certaines parties préalablement écrouies (112) d'un fil (110) sont chauffées pour obtenir un recuit, et
- une étape de rétreint final, se déroulant après l'étape de recuit, dans laquelle les parties recuites (112) sont rétreintes pour diminuer leur section.

10. Procédé selon la revendication 9, **caractérisé en ce qu'il** comprend une étape de rétreint préliminaire, se déroulant avant l'étape de recuit, dans laquelle sont rétreintes des parties du fil (100) qui constitueront lesdites certaines parties (112) ensuite chauffées lors de l'étape de recuit.

11. Procédé selon l'une des revendications 9 à 10, **caractérisé en ce que** lors de l'étape de recuit, lesdites certaines parties (112) du fil (110) sont chauffées au moyen d'un courant électrique qui les traverse.

12. Procédé selon la revendication 10, **caractérisé en ce que** le courant électrique est transmis au fil (100, 110, 120) par des galets (102, 104) appartenant à un dispositif (210) utilisé pour effectuer l'étape de rétreint préliminaire et/ou l'étape de rétreint final.

13. Procédé selon l'une des revendications 9 à 12, **caractérisé en ce que** lors de l'étape de recuit, au moins lesdites certaines parties (112) du fil (110) sont placées dans une enceinte contenant une atmosphère neutre.

14. Procédé selon l'une des revendications 9 à 13, **caractérisé en ce qu'il** comprend une étape de façonnage, dans laquelle des extrémités de l'âme (5) sont façonnées pour leur donner leur géométrie de fixation à une roue de cycle.

## Patentansprüche

1. Speiche (2), welche eine Metallseele (5) aufweist, die wenigstens in ihrem mittleren Teil von einer Hülse (12) aus Verbundmaterial bedeckt ist, das aus einer Anordnung von in eine Matrix eingebetteten Fasern besteht, **dadurch gekennzeichnet, dass** die Seele (5) einen Endabschnitt, der dafür vorgesehen ist, an der Felge oder an der Nabe eines Rades befestigt zu werden, und einen Hauptkörper (6), dessen Querschnittsfläche zwischen 30 % und 50 % der Querschnittsfläche des Endabschnitts beträgt, aufweist.

2. Speiche (2) nach Anspruch 1, **dadurch gekennzeichnet, dass** im Bereich des Hauptkörpers die Hülse (12) aus Kohlenstoff einen Querschnitt aufweist, der zwischen 150 % und 500 % des Querschnitts der Metallseele (5) in demselben Bereich beträgt.

3. Speiche (2) nach einem der vorhergehenden Ansprüche, **dadurch gekennzeichnet, dass** die Querschnittsfläche des Hauptkörpers (6) der Seele zwischen 35 % und 45 % der Querschnittsfläche des Endabschnitts beträgt, und dadurch, dass im Bereich des Hauptkörpers die Querschnittsfläche der Hülse (12) zwischen 150 % und 350 % der Querschnittsfläche der Seele in demselben Bereich beträgt.

4. Speiche (2) nach einem der vorhergehenden Ansprüche, **dadurch gekennzeichnet, dass** die Seele (5) zwei mechanische Verankerungsbereiche (10) aufweist, die sich jeweils in der Nähe einer ihrer Enden beiderseits des Hauptkörpers befinden.

5. Speiche (2) nach einem der vorhergehenden Ansprüche, **dadurch gekennzeichnet, dass** zwischen den zwei mechanischen Verankerungsbereichen (10) die Außenfläche des Hauptkörpers der Seele (5) glatt ist.

6. Speiche (2) nach einem der vorhergehenden Ansprüche, **dadurch gekennzeichnet, dass** jenseits der zwei Verankerungsbereiche die Seele (5) zwei Zwischenbereiche aufweist, deren Außenfläche glatt ist.

7. Rad, welches eine Speiche nach einem der vorhergehenden Ansprüche aufweist.

8. Verfahren zur Herstellung einer Speiche (2) für ein Rad eines Fahrrads nach einem der Ansprüche 1 bis 6, **dadurch gekennzeichnet, dass** die Herstellung der Seele (5) einen Schritt des Hämmerns zum Verringern ihres Durchmessers im Bereich des Hauptkörpers aufweist.

9. Verfahren zur Herstellung einer Speiche (2) für ein Rad eines Fahrrads nach einem der Ansprüche 1 bis 6, **dadurch gekennzeichnet, dass** die Herstellung der Seele (5) die folgenden Schritte aufweist:
- einen Glühschritt, in welchem nur gewisse zuvor hartgezogene Abschnitte (112) eines Drahtes (110) erwärmt werden, um ein Glühen zu bewirken, und
- einen Schritt der abschließenden Querschnittsverminderung, der nach dem Glühschritt durchgeführt wird und in welchem die geglühten Abschnitte (112) einer Querschnittsverminderung unterzogen werden, um ihren Querschnitt zu verringern.

10. Verfahren nach Anspruch 9, **dadurch gekennzeichnet, dass** es einen Schritt der vorbereitenden Querschnittsverminderung aufweist, der vor dem Glühschritt durchgeführt wird und in dem Abschnitte des Drahtes (100) einer Querschnittsverminderung unterzogen werden, welche danach die gewissen Abschnitte (112) darstellen, die anschließend während des Glühschrittes erwärmt werden.

11. Verfahren nach einem der Ansprüche 9 bis 10, dadurch gekennzeichet, dass während des Glühschrittes die gewissen Abschnitte (112) des Drahtes (110) mittels eines elektrischen Stroms erwärmt werden, der durch sie hindurchfließt.

12. Verfahren nach Anspruch 10, dadurch gekennzeichet, dass der elektrische Strom auf den Draht (100, 110, 120) durch Rollen (102, 104) übertragen wird, die zu einer Vorrichtung (210) gehören, die verwendet wird, um den Schritt der vorbereitenden Querschnittsverminderung und/oder den Schritt der abschließenden Querschnittsverminderung durchzuführen.

13. Verfahren nach einem der Ansprüche 9 bis 12, **dadurch gekennzeichnet, dass** während des Glühschrittes wenigstens die gewissen Abschnitte (112) des Drahtes (110) in einer Kammer angeordnet sind, die eine neutrale Atmosphäre enthält.

14. Verfahren nach einem der Ansprüche 9 bis 13, **dadurch gekennzeichnet, dass** es einen Formungsschritt aufweist, in welchem Enden der Seele (5) geformt werden, um ihnen ihre Geometrie zur Befestigung an einem Rad eines Fahrrads zu verleihen.

## Claims

1. Spoke (2) comprising a metal core (5), at least the central portion of which is covered by a sheath (12) made of a composite material which consists of an assembly of fibres embedded in a matrix, **characterized in that** the core (5) comprises an end portion, which is designed to be attached to the rim or to the hub of a wheel, and a main body (6) whose cross section area is between 30% and 50% of the cross section area of said end portion.

2. Spoke (2) according to Claim 1, **characterized in that**, at the main body, the cross section of the carbon sheath (12) is between 150% and 500% of the cross section of the metal core (5) at the same point.

3. Spoke (2) according to either of the preceding claims, **characterized in that** the cross section area of the main body (6) of the core is between 35% and 45% of the cross section area of the end portion and **in that**, at the main body, the cross section area of the sheath (12) is between 150% and 350% of the cross section of the core at the same point.

4. Spoke (2) according to one of the preceding claims, **characterized in that** the core (5) comprises two mechanical anchoring regions (10), each of which is located close to one of its ends, on either side of the main body.

5. Spoke (2) according to one of the preceding claims, **characterized in that**, between the two mechanical anchoring regions (10), the outer surface of the main body of the core (5) is smooth.

6. Spoke (2) according to one of the preceding claims, **characterized in that**, beyond the two anchoring regions, the core (5) comprises two intermediate regions whose outer surface is smooth.

7. Wheel comprising a spoke according to one of the preceding claims.

8. Method for manufacturing a spoke (2) for a bicycle wheel according to one of Claims 1 to 6, **characterized in that** the manufacture of the core (5) comprises a swaging step in order to reduce the diameter of the main body of the spoke.

9. Method for manufacturing a spoke (2) for a bicycle wheel according to one of Claims 1 to 6, **characterized in that** the manufacture of the core (5) comprises the following steps:
- an annealing step in which only certain previously work-hardened portions (112) of a wire (110) are heated in order to anneal them, and
- a final necking step which takes place after the annealing step and which involves necking the annealed portions (112) so as to reduce their cross section.

10. Method according to Claim 9, **characterized in that** it comprises a preliminary necking step which takes place before the annealing step and which involves necking portions of the wire (100) which will constitute said certain portions (112) which are then heated during the annealing step.

11. Method according to either of Claims 9 and 10, **characterized in that**, during the annealing step, said certain portions (112) of the wire (110) are heated by means of an electric current passing through them.

12. Method according to Claim 10, **characterized in that** the electric current is transmitted to the wire (100, 110, 120) by rollers (102, 104) which belong to a device (210) used to carry out the preliminary necking step and/or the final necking step.

13. Method according to one of Claims 9 to 12, **characterized in that** during the annealing step at least said certain portions (112) of the wire (110) are placed in an enclosure containing a neutral atmosphere.

14. Method according to one of Claims 9 to 13, **characterized in that** it comprises a shaping step in which ends of the core (5) are shaped so as to provide them with their geometry for attaching to a bicycle wheel.
